# EUROPÄISCHE PATENTSCHRIFT

(11) **EP 1 556 637 B1**
(45) Veröffentlichungstag und Bekanntmachung des Hinweises auf die Patenterteilung: **19.03.2008**
(21) Anmeldenummer: 03776793.6
(22) Anmeldetag: 13.10.2003
(51) Int. Cl.: F16H 61/32

(54) **GANGSCHALTMECHANISMEN**
GEAR SHIFTING MECHANISMS
MECANISMES DE CHANGEMENT DE VITESSE

(30) Priorität: 19.10.2002 GB 0224334
(43) Veröffentlichungstag der Anmeldung: 27.07.2005
(73) Patentinhaber: LuK Lamellen und Kupplungsbau Beteiligungs KG, 77815 Bühl (DE)
(72) Erfinder: BATES, Ian, Richard, Joseph, Huddersfield, West Yorkshire HD3 3XZ (GB)
(86) Internationale Anmeldenummer: PCT/DE2003/003384
(87) Internationale Veröffentlichungsnummer: WO 2004/038261

(56) Entgegenhaltungen:
- EP-A- 1 070 884
- DE-A- 10 108 881
- DE-A- 10 149 528
- PATENT ABSTRACTS OF JAPAN vol. 2000, no. 13, 5. Februar 2001 (2001-02-05) -& JP 2000 291796 A (DAIHATSU MOTOR CO LTD), 20. Oktober 2000 (2000-10-20)

## Beschreibung

Die vorliegende Erfindung betrifft Gangschaltmechanismen und insbesondere Gangschaltmechanismen für den Einsatz mit automatisierten Doppelkupplungsgetriebesystemen zum Beispiel von dem Typ, der in GB2369656 A offenbart ist

Bei Doppelkupplungsgetriebesystemen dieser Art überträgt eine erste Kupplung, wenn eingerückt, Drehmoment zwischen der Abtriebswelle eines Motors und einer ersten Antriebswelle des Getriebes und eine zweite Kupplung, wenn eingerückt, überträgt Leistung zwischen der Abtriebswelle des Motors und einer zweiten Antriebswelle des Getriebes. Die erste und die zweite Antriebswelle sind koaxial zueinander angebracht.

Ein erster Satz Zahnräder ist zur Drehung mit der ersten Antriebswelle angebracht und ein zweiter Satz Zahnräder ist zur Drehung mit der zweiten Antriebswelle angebracht, wobei der erste und der zweite Satz Zahnräder drehbar auf einer oder mehreren Vorgelegewellen angebracht sind. Der erste und der zweite Zahnräder und das Zahnrad, mit dem sie kämmen, sind angeordnet, um verschiedene Übersetzungsverhältnisse bereitzustellen. Typischerweise stellt der erste Satz Zahnräder, welcher der ersten Kupplung beigefügt ist, die erste, dritte, fünfte und siebente Gangstufe bereit und der zweite Satz Zahnräder, welcher der zweiten Kupplung beigefügt ist, stellt die zweite, vierte und sechste Gangstufe und einen Rückwartsgang bereit.

Eines der Zahnräder jedes Paares von kämmenden Zahnrädern ist auf der beigefügten Welle zur Drehung relativ dazu angebracht und ist ausgewählt drehbar mit der Welle mittels einer Synchronschalteinheit verbunden. Jede Synchronschalteinheit ist zwischen einem Paar Zahnrädern positioniert, so dass eine Bewegung der Synchronschalteinheit axial in Richtung eines Zahnrads dieses eine Zahnrad in Eingriff bringt und Bewegung axial in Richtung des anderen Zahnrads das andere Zahnrad in Eingriff bringt. Die Bewegung der Synchronschalteinheiten wird mittels Schaltlinealen gesteuert, wobei ein Aufsatz auf jedem der Schaltlineale in eine Umfangsnut in der Synchronschalteinheit eingreift.

Bei Getriebesystemen dieser Art wäre die Kupplung, die den eingelegten Gang steuert, eingerückt, während die andere Kupplung ausgerückt ist. Um Gang zu wechseln, kann ein Gang, welcher der anderen Kupplung beigefügt ist, durch geeignete Handhabung der Synchronschalteinheit, die jenem Gang zugeordnet ist, eingelegt werden, während der zum Zeitpunkt eingelegte Gang eingerückt bleibt. Der Gangwechsel wird dann durch gleichzeitiges Ausrücken einer Kupplung und Einrücken der anderen Kupplung ausgeführt, um ein sanftes Übergeben des Drehmoments zu erzielen.

Beim nächsten Wechsel ist es notwendig, die Synchronschalteinheiten so zu steuern, um den vorher eingelegten Gang auszurücken und den Zielgang einzulegen.

Wenn ein herkömmlicher Schaltmechanismus verwendet wird, bei welchem nur eine einzelne Synchronschalteinheit zu einem Zeitpunkt gesteuert werden kann, wird dies die Geschwindigkeit des Schaltens negativ beeinflussen. Dieses Problem kann durch Ausnützen getrennter Betätigungsglieder für jedes der Schaltlineale überwunden werden, wie in GB2369656 A vorgeschlagen. Dies erfordert jedoch die Vervielfältigung der Betätigungsglieder und der Steuerausrüstung und erhöht die Kosten des Systems beträchtlich. Des Weiteren können für Getriebe mit einer größeren Anzahl von Gängen ernste Probleme beim Einbau der zahlreichen Betätigungsglieder im zur Verfügung stehenden Platz auftreten.

Aus der JP 2000-291796 A ist ein Schaltmechanismus mit den Merkmalen des Oberbegriffes des Anspruches 1 bekannt.

Gemäß einem Aspekt der vorliegenden Erfindung umfasst ein Schaltmechanismus für ein Doppelkupplungsgetriebesystem:
eine Mehrzahl von Schaltlinealen, die parallel zueinander angebracht sind, wobei jedes Schaltlineal so ausgelegt ist, um eine Synchronschalteinheit eines vielstufigen Schaltgetriebes zu steuern; dadurch gekennzeichnet, dass
eine Schalttrommel zur Drehung um eine Achse parallel zu einer Achse der Schaltlineale angebracht ist, wobei die Schalttrommel zur Drehung auf einer Steuerwelle angebracht ist;
wobei die Schalttrommel eine ringförmige Nut aufweist, wobei sich ein Schaltfinger von jedem der Schaltlineale in die Ringnut erstreckt, wobei der Schaltfinger der Schaltlineale um die Nut in winkelig beabstandeten Stellen angeordnet ist;
wobei die ringförmige Nut in der Schalttrommel einen ersten Abschnitt mit einer axialen Breite aufweist, die eine enge Spielpassung mit den Schaltfingern der Schaltlineale und einem zweiten Abschnitt ergibt, wobei deren Breite ausreicht, um axiale Bewegung des Schaltfingers an den Schaltlinealen zwischen einer ersten Position, in welcher ein erster Gang, welcher der Synchronschalteinheit beigefügt ist, die vom Schaltlineal gesteuert wird, eingelegt wird, und einer zweiten Position zuzulassen, in weicher ein zweiter Gang, welcher der Synchronschalteinheit beigefügt ist, die vom Schaltlineal gesteuert wird, eingelegt wird, wobei Rampen in den Wänden der Nut zwischen dem ersten und dem zweiten Abschnitt bereitgestellt sind;
wobei ein axialer Schlitz in der Schalttrommel bereitgestellt ist, wobei der axiale Schlitz sich über die Wände der ringförmigen Nut mittig vom zweiten Abschnitt davon hinaus erstreckt;
wobei Schaltbetätigungsmittel auf der Steuerwelle bereitgestellt sind, wobei die Schaltbetätigungsmittel sich durch den axialen Schlitz erstrecken;
Mittel zum Drehen der Schalttrommel und der Steuerwelle, um die Schaltbetätigungsmittel auf der Steuerwelle in axiale Ausrichtung mit dem Schaltfinger auf einem der Schaltlineale zu bringen; und
Mittel zum Bewegen der Steuerwelle in axialer Richtung, um den Schaltfinger auf dem gefluchteten Schaltlineal zu einer Wand des zweiten Abschnitts der ringförmigen Nut zu bewegen, um einen ebendort beigefügten Gang einzulegen.

Auf diese Weise können durch Drehung der Schalttrommel und axiale Bewegung der Steuerwelle zwei Betätigungsglieder, ein Drehstellglied und ein Linearstellglied, eingesetzt werden, um alle Synchronschalteinheiten des Schaltgetriebes zu steuern. Die zweite Position der ringförmigen Nut ist so angeordnet, dass eine Drehung der Schalttrommel, um einen neuen Zielgang einzulegen, automatisch den vorher eingelegten Gang ausrückt, wobei der Schaltfinger desselben zurück in eine neutrale Position durch die Rampe zwischen dem zweiten und dem ersten Abschnitt der ringförmigen Nut bewegt wird. Gleichzeitig bleibt der zu diesem Zeitpunkt eingelegte Gang im zweiten Abschnitt der ringförmigen Nut. Des Weiteren können alle Gänge in die neutrale Position durch Drehen der Schalttrommel gedrängt werden, so dass alle Schaltfinger auf den Schaltlinealen in der ersten Position der ringförmigen Nut aufgenommen sind.
Die Schaltfinger auf den Schaltlinealen und das Schaltbetätigungsmittel auf der Steuerwelle müssen in der Lage sein, die Schaltlineale in jede der zwei Richtungen zu bewegen..Eine gegabelte Schaltbetätigung muss folglich entweder an den Schaltlinealen oder an der Steuerwelle vorgesehen sein, so dass der Schaltfinger auf dem jeweils anderen Bauteil zwischen der gegabelten Schaltbetätigung angeordnet ist, wodurch Bewegung in beide Richtungen erst möglich wird.

Die Erfindung wird nun über bloße Beispiele mit Bezugnahme auf die begleitenden Zeichnungen beschrieben, wobei:-
Figur 1 eine schematische Darstellung eines Doppelkupplungssystems ist;
Figur 2 eine isometrische Ansicht eines Gangschaltmechanismus gemäß der vorliegenden Erfindung ist;
Figur 3 ein seitlicher Aufriss in Schnittdarstellung des Schaltmechanismus ist, der in Figur 2 dargestellt ist;
Figur 4 ein Schnitt entlang der Linie iv-iv aus Figur 3 ist; und
Figur 5a bis 5e Abbildungen einer Spur auf einer Schalttrommel des Mechanismus zeigen, der in Figur 2 bis 4 dargestellt ist, wobei sie Schaltungen in einen 1. Gang und Wechsel vom 1. Gang - 2. Gang - 3. Gang - 4. Gang darstellen.

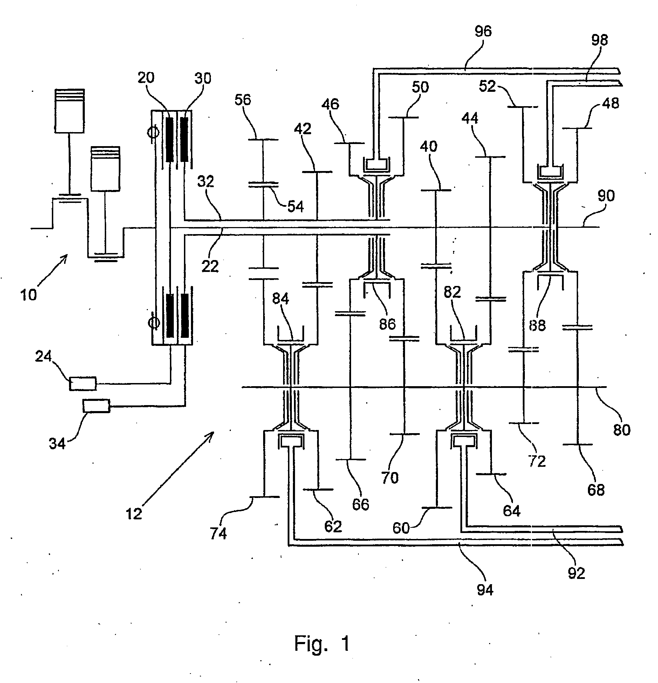

Im Getriebesystem, das in Figur 1 dargestellt ist, überträgt eine erste aktive Kupplung 20, wenn eingerückt, Drehmoment zwischen der Abtriebswelle des Motors 10 und einer ersten Antriebswelle 22 des Getriebes 12 und eine zweite aktive Kupplung 30, wenn eingerückt, überträgt Leistung zwischen der Abtriebswelle des Motors 10 und einer zweiten Antriebswelle 32 des Getriebes 12. Die Antriebswelle 32 erstreckt sich koaxial zur Antriebswelle 22. Das Einrücken der Kupplungen 20 und 30 wird unabhängig durch die folgegesteuerten Kupplungszylinder 24 beziehungsweise 34 gesteuert, wobei hydraulischer Druck auf die folgegesteuerten Kupplungszylinder 24, 34 angelegt wird, um die Kupplungen 20 beziehungsweise 30 einzurücken.

Die Antriebswelle 22 weist zwei Zahnräder 40, 44 auf, die auf ihr zur Drehung mit ihr angebracht sind. Zwei weitere Zahnräder 48, 52 sind auf der Antriebswelle 22 zur Drehung relativ zu ihr angebracht, wobei die Zahnräder 48 und 52 selektiv zur Drehung mit der Antriebswelle 22 mittels einer Synchronschalteinheit 88 eingerückt werden.

Die Antriebswelle 32 weist zwei Zahnräder 42, 54 auf, die auf ihr zur Drehung mit ihr angebracht sind. Zwei weitere Zahnräder 46, 50 sind auf der Antriebswelle 32 zur Drehung relativ zu ihr angebracht, wobei die Zahnräder 46 und 50 selektiv zur Drehung mit der Antriebswelle 32 mittels einer Synchronschalteinheit 86 eingerückt werden.

Die Zahnräder 40, 42, 44, 46, 48, 50 und 52 kämmen mit den Zahnrädern 60, 62, 64, 66, 68, 70 beziehungsweise 72 und das Zahnrad 54 kämmt mit dem Zahnrad 74 mittels eines Zwischenzahnrads 56. Die Zahnräder 60, 62, 64, 66, 68, 70, 72 und 74 sind auf einer Vorgelegewelle 80 angebracht, welche parallel zu, aber beabstandet von den Antriebswellen 22 und 32 liegt. Die Zahnräder 66, 68, 70 und 72 sind auf der Vorgelegewelle 80 zur Drehung mit dieser angebracht, während die Zahnräder 60, 62, 64 und 74 auf der Vorgelegewelle 80 zur Drehung relativ zu dieser angebracht sind, wobei die Zahnräder 60 und 64 ausgewählt zur Drehung mit der Vorgelegewelle 80 mittels einer Synchronschalteinheit 82 eingerückt werden und die Zahnräder 62 und 74 ausgewählt zur Drehung mit der Vorgelegewelle 80 mittels einer Synchronschalteinheit 84 eingerückt werden.

Die Zahnräder 40 und 60 sind so abgestimmt, um einen ersten Gang bereitzustellen; die Zahnräder 42 und 62 einen zweiten Gang; die Zahnräder 44 und 64 einen dritten Gang; die Zahnräder 46 und 66 einen vierten Gang; die Zahnräder 50 und 70 einen sechsten Gang und die Zahnräder 52 und 72 einen siebenten Gang; während das Zwischenzahnrad 56 die Drehrichtung umkehrt, so dass die Zahnräder 54 und 74 einen Rückwärtsgang bereitstellen.

Die Vorgelegewelle 80 ist zu Antriebszwecken mit einer Abtriebswelle 90 vom Getriebe 12 mittels der Zahnräder 68 und 48 verbunden.
Die Synchronschalteinheiten 82, 84, 86, 88 werden durch die einzelnen Schaltlineale 92, 94, 96 beziehungsweise 98 gesteuert, durch welche sie axial zur jeweiligen Antriebswelle 22, 32 oder der Vorgelegewelle 80 bewegt werden können; wobei die Synchronschalteinheit 82 nach links, wie in Figur 1 dargestellt, um das Zahnrad 60 mit der Vorgelegewelle 80 einzurücken, oder nach rechts bewegt werden kann, um das Zahnrad 64 mit der Vorgelegewelle 80 einzurücken; die Synchronschalteinheit 84 nach links, um das Zahnrad 74 mit der Vorgelegewelle 80 einzurücken, oder nach rechts bewegt werden kann, um das Zahnrad 62 mit der Vorgelegewelle 80 einzurücken; die Synchronschalteinheit 86 nach links, um das Zahnrad 46 mit der Antriebswelle 32 einzurücken, oder nach rechts bewegt werden kann, um das Zahnrad 50 mit der Antriebswelle 32 einzurücken; und die Synchronschalteinheit 88 nach links, um das Zahnrad 52 mit der Antriebswelle 22 einzurücken, oder nach rechts bewegt werden kann, um das Zahnrad 48 mit der Antriebswelle 22 einzurücken, wodurch die Antriebswelle 32 direkt mit der Abtriebswelle 90 gekuppelt wird, um einen direkten Antrieb, fünfter Gang, bereitzustellen.

Die Kupplung 20 kann folglich eingesetzt werden, um ausgewählt den ersten, dritten, fünften und siebenten Gang durch geeignete Handhabung der Schaltlineale 92 und 98 einzurücken, während die Kupplung 30 eingesetzt werden kann, um ausgewählt den zweien, vierten, sechsten Gang und den Rückwärtsgang durch geeignete Handhabung der Schaltlineale 94 und 96 einzurücken. Wenn das Getriebe sich in einem Gang befindet, wobei eine der Kupplungen 20, 30 eingerückt ist, kann ein Gang, der mit der ausgerückten Kupplung 30, 20 in Verbindung steht, ausgewählt werden. Um den Gang zu wechseln, wird die eingerückte Kupplung 20, 30 ausgerückt, die andere Kupplung 30, 20 gleichzeitig eingerückt, wobei das Drehmoment, das durch die zwei Kupplungen übertragen wird, ausgeglichen wird, um einen sanften Gangwechsel bereitzustellen.

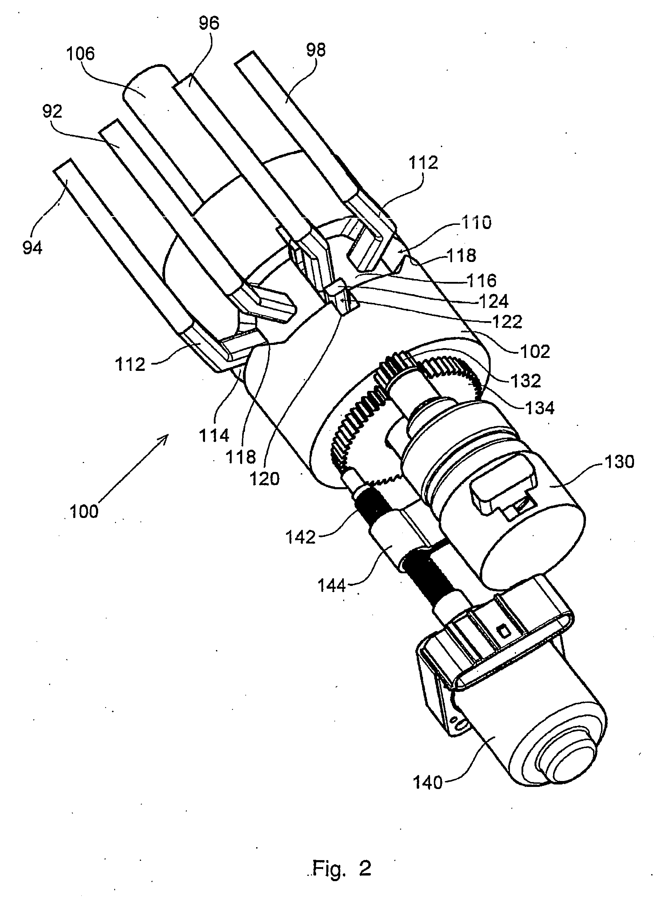

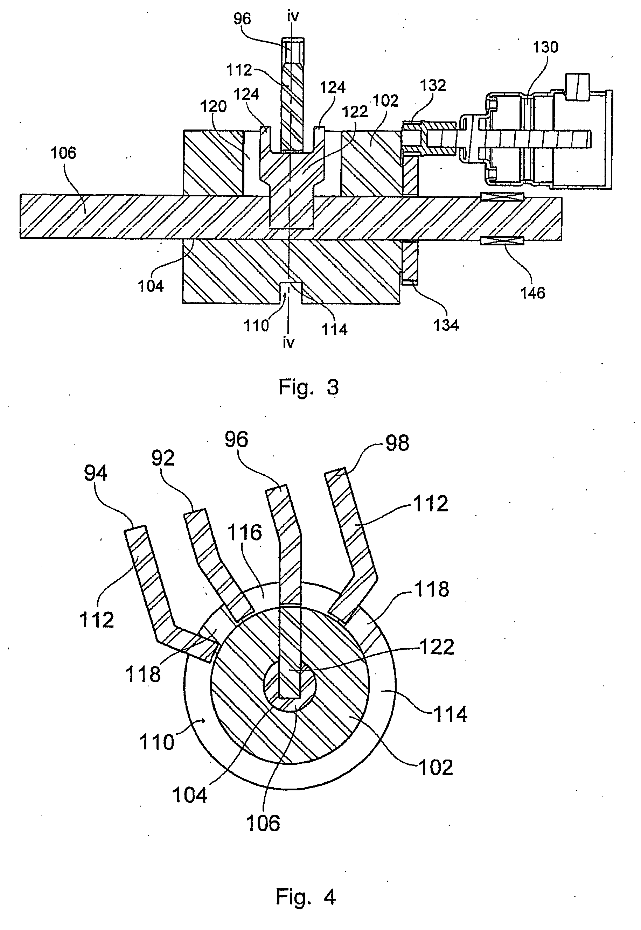

Die Schaltlineale 92, 94, 96 und 98 werden axial mittels eines Betätigungsgliedmechanismus 100 bewegt, wie in Figur 2 bis 4 dargestellt. Die Schaltlineale 92, 94, 96 und 98 sind parallel zueinander angebracht, wobei ein Bügel (nicht gezeigt) auf jedem der Schaltlineale 92, 94, 96, 98 in Richtung des Endes derselben, das entfernt vom Betätigungsgliedmechanismus 100 gelegen ist, angebracht ist, der jeweils entsprechend in eine Umfangsnut in jeder der Synchronschalteinheiten 82, 84, 86 beziehungsweise 88 eingreift.

Der Betätigungsgliedmechanismus 100 umfasst eine Schalttrommel 102, welche zur Drehung um eine Achse parallel zur Achse der Schaltlineale 92, 94, 96, 98 angebracht ist. Die Schalttrommel 102 weist eine axiale Bohrung 104 auf, wobei eine Steuerwelle 106 koaxial zur Schalttrommel 102 angebracht ist und wobei sich die Steuerwelle 106 durch die Bohrung 104 erstreckt. Die Steuerwelle 106 ist für eine Bewegung axial zur Schalttrommel 102 und zur Drehung mit der Schalttrommel 102 angebracht.

Die Schalttrommel 102 weist eine ringförmige Nut 110 in ihrem äußeren Durchmesser auf. Ein Schaltfinger 112 am Ende jedes Schaltlineals 92, 94, 96, 98 erstreckt sich in die Nut 110, wobei die Schaltfinger 112 an winkelig versetzten Orten um die Nut 110 angeordnet sind. Die Nut 110 weist einen ersten sich entlang des Umfangs erstreckenden Abschnitt 114, welcher eine axiale Breite besitzt, die eine enge Spielpassung mit den Schaltfingern 112 auf den Schaltlinealen 92, 94, 96, 98 ergibt; und einen zweiten sich entlang des Umfangs erstreckenden Abschnitt 116 auf, dessen Breite ausreicht, um eine Bewegung der Schaltlineale 92, 94, 96, 98 in beide Richtungen in ausreichendem Ausmaß zuzulassen, um das Eingreifen der Zahnräder 60, 64; 74, 62; 46, 50; 52, 48, die dem jeweilig entsprechenden Schaltlineal 92, 94, 96, 98 beigefügt sind, zu ermöglichen. Der erste Abschnitt 114 der Nut 110 und die Schaltfinger 112 auf den Schaltlinealen 92, 94, 96, 98 sind so angeordnet, dass, wenn die Schaltfinger 112 in den Abschnitt 114 eingreifen, die Synchronschalteinheit sich in einer neutralen Position befindet, in welcher keines der Zahnräder 60, 64; 74, 62; 46, 50; 52, 48, die eben dieser Einheit beigefügt sind, mit den zugeordneten Wellen 22, 32, 80 in Eingriff stehen. Die Wände der Nut 110 zwischen dem ersten und dem zweiten Abschnitt 114, 116 definieren die Rampenausbildungen 118.

Ein axialer Schlitz 120 ist in der Schalttrommel 102 bereitgestellt, wobei sich der axiale Schlitz 120 radial von der Bohrung 104 zum äußeren Durchmesser der Schalttrommel 102 mittig zum zweiten Abschnitt 116 der Nut 110 und axial über die Wände der Nut 110 hinaus, welche den zweiten Abschnitt 116 derselben definieren, erstreckt.

Ein gegabeltes Schaltbetätigungsmittel 122 ist auf der Steuerwelle 106 zur axialen Bewegung mit derselben angebracht. Das Schaltbetätigungsmittel erstreckt sich durch den Schlitz 120 hindurch. Parallele Forken 124 des gegabelten Schaltbetätigungsmittels 122 sind so beabstandet, um das Anordnen der Schaltfinger 112 dazwischen zu ermöglichen, so dass sie axial in beide Richtungen durch axiale Bewegung der Steuerwelle 106 bewegt werden können, wobei das axiale Ausmaß des Schlitzes 120 ausreicht, um die axiale Bewegung der Schaltfinger 112 in die axialen Endiagen des zweiten Abschnitts 116 der Nut 110 zuzulassen.

Ein erster Elektromotor 130 ist antriebsfähig mit einem Ritzel 132 verbunden, welches mit einem Zahnrad 134 kämmt, das auf der Endfläche der Schalttrommel 102 zur Drehung der Schalttrommel 102 und der Steuerwelle 106 ausgebildet ist. Ein zweiter Elektromotor 140 treibt eine Leitspindel 142, wobei die Leitspindel 142 parallel, aber versetzt zur Steuerwelle 106 liegt. Ein Leitspindelschloss 144 greift in den Gewindegang auf der Leitspindel 142 ein, wobei das Leitspindelschloss 144 an die Steuerwelle 106 mittels eines Lagers 146 angefügt ist, welches die Drehung der Steuerwelle 106 zulässt, aber axial in Bezug auf die Steuerwelle 106 fixiert ist. Die Drehung der Leitspindel 142 durch den Motor 140 veranlasst folglich das Leitspindelschloss 144, welches an der Drehung durch die Steuerwelle 106 gehindert ist, sich axial zur Leitspindel 142 zu bewegen, wodurch die axiale Bewegung der Steuerwelle 106 erwirkt wird.

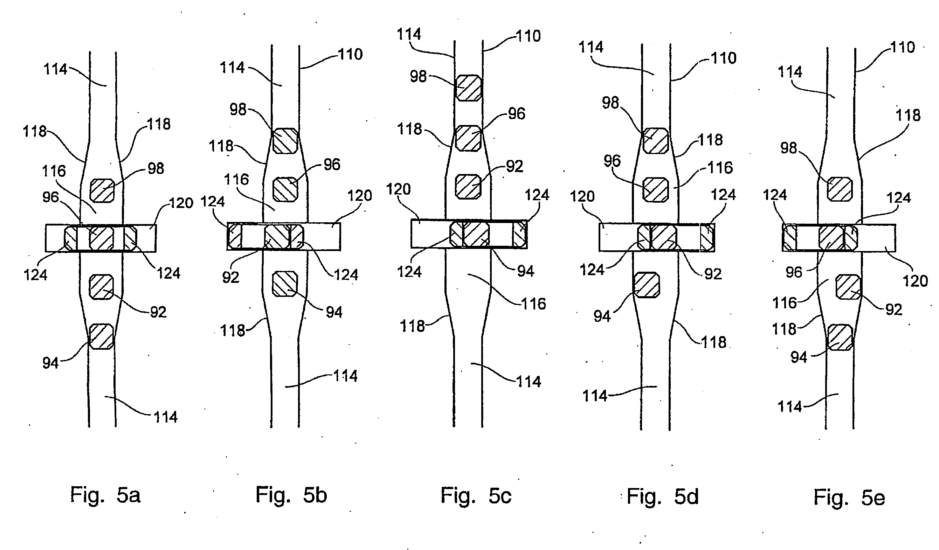

Wenn das Getriebe 12 sich mit allen vier Synchronschalteinheiten 92, 94, 96, 98 in ihren neutralen Positionen im Leerlauf befindet, wie in Figur 5a dargestellt, kann ein Gang durch Anfahren des Elektromotors 140 gewählt werden, um die Steuerwelle 106 zu bewegen, so dass das Schaltbetätigungsmittel 122 mittig zum Schlitz 120 angeordnet ist. Die Schalttrommel 102 und die Steuerwelle 106 können dann durch den Motor 130 gedreht werden, bis das Schaltbetätigungsmittel 122 axial mit dem Schaltfinger 112 auf dem Schaltlineal 92, 94, 96, 98 ausgerichtet ist, welches dem einzurückenden Gang zugeordnet ist. Der Motor 140 kann dann angefahren werden, um die Steuerwelle 106 in die richtige axiale Richtung zu bewegen, um den Gang einzurücken. Um zum Beispiel den ersten Gang einzurücken, wird die Kupplung 20 ausgerückt, der Motor 130 wird angefahren, um die Schalttrommel 102 und die Steuerwelle 106 zu drehen, so dass die Schaltbetätigung 122 mit dem Schaltfinger 112 auf dem Schaltlineal 92 gefluchtet ist. Der Motor 140 wird dann angefahren, um das Schaltlineal 92 nach links zu bewegen, wie in Figur 5b gezeigt, so dass der Schaltfinger 112 zur linken Seite des Abschnitts 116 der Nut 110 bewegt wird und das Zahnrad 60 zur Drehung mit der Vorgelegewelle 80 eingerückt wird. Die Kupplung 20 wird dann erneut eingerückt, um den ersten Gang eingreifen zu lassen.

Um vom ersten in den zweiten Gang zu wechseln, wird der Motor 130 angefahren, um die Schalttrommel 102 und die Steuerwelle 106 zu drehen, so dass das Schaltbetätigungsmittel 122 in eine Position auf halbem Weg zu den Schaltfingern 112 auf den Schaltlinealen 92, 94 bewegt wird. Der Motor 140 wird dann angefahren, um das Schaltbetätigungsmittel 122 zurück in die Position mittig zum Spalt 120 zu bewegen, während der erste Gang eingelegt bleibt. Der Motor 130 wird dann wiederum angefahren, um die Schalttrommel 102 und die Steuerwelle 106 zu drehen, um das Schaltbetätigungsmittel 122 mit dem Schaltfinger 112 auf dem Schaltlineal 94 auszurichten. Die Kupplung 30 wird dann ausgerückt und der Motor 140 angefahren, um die Steuerwelle 106 und das Schaltlineal 94 nach rechts zu bewegen, wie in Figur 5c dargestellt, wodurch das Zahnrad 62 zur Drehung mit der Vorgelegewelle 80 eingerückt wird. Die Kupplung 30 kann dann eingerückt werden, während die Kupplung 20 ausgerückt wird, um den zweiten Gang einzurücken.

Bei einem anschließenden Wechsel vom zweiten in den dritten Gang wird der Motor 130 angefahren, um das Schaltbetätigungsmittel 122 in eine Position auf halbem Weg zu den Schaltfingern 112 auf den Schaltlinealen 92, 94 zu bewegen. Das Schaltbetätigungsmittel wird dann auf die linke Seite des Schlitzes 120 durch den Motor 140 bewegt und durch den Motor 130 gedreht, um das Schaltbetätigungsmittel 122 zurück in die Flucht mit dem Schaltfingermittel 112 auf dem Schaltlineal 92 zu bringen. Der Motor 140 kann dann angefahren werden, um das Schaltlineal 92 auf die rechte Seite der Nut 110 zu bewegen, wie in Figur 5d dargestellt, so dass das Zahnrad 60 von der Welle 80 ausgerückt und das Zahnrad 64 in die Welle 80 eingerückt wird. Die Kupplung 30 kann dann ausgerückt und die Kupplung 20 eingerückt werden, um vom zweiten Gang in den dritten Gang zu wechseln.

Um vom dritten Gang in den vierten zu wechseln, wird das Schaltbetätigungsmittel 122 in eine Position auf halbem Weg zu den Schaltfingern 112 gedreht, seitlich in eine zentrale Position bewegt und in Ausrichtung mit dem Schaltfinger 112 auf den Schaltlinealen 96 gedreht, was auf ähnliche Weise geschieht, wie oben offenbart. Während sich das Schaltbetätigungsmittel 122 jedoch von der Ausrichtung mit dem Schaltfinger 112 auf dem Schaltlineal 92 in die Ausrichtung mit dem Schaltfinger 112 auf dem Schaltlineal 96 bewegt, gelangt der Schaltfinger 112 auf dem Schaltlineal 94 mit der Rampenausbildung 118 in Eingriff und wird in seine neutrale Position bewegt, so dass das Schaltlineal 94 das Zahnrad 62 aus dem Eingriff mit der Vorgelegewelle 80 bringt. Der Motor 140 kann dann angefahren werden, um das Schaltbetätigungsmittel 122 nach links zu bewegen, wie in Figur 5e dargestellt, wobei es das Zahnrad 66 zur Drehung mit der Welle 22 einrückt. Das Einrücken der Kupplung 30 und das Ausrücken der Kupplung 20 wechselt dann vom dritten Gang in den vierten Gang.

Andere Gangwechsel können auf ähnliche Weise erzielt werden.

Darüber hinaus können alle Schaltlineale 92, 94, 96, 98 in die neutrale Position durch Drehung der Schalttrommel 102 gezwungen werden, so dass alle Schaltfinger 112 im ersten Abschnitt 114 der Nut 110 angeordnet sind.

Verschiedene Modifikationen können durchgeführt werden, ohne von der Erfindung abzuweichen, zum Beispiel können die Schaltfinger 112 auf den Schaltlinealen 92, 94, 96, 98 gegabelt und das Schaltbetätigungsmittel 122 auf der Steuerwelle 106 so ausgelegt sein, um zwischen den Forken der gegabelten Schaltfinger 112 einzugreifen, um eine Bewegung der Schaltlineale 92, 94, 96, 98 in beide Richtungen zuzulassen.

Andere Mittel können zur Drehung der Schalttrommel 102 und der Steuerwelle 106 und zum Bewegen der Steuerwelle 106 in axiale Richtung verwendet werden, zum Beispiel andere elektromechanische Mechanismen, pneumatische oder hydraulische Mittel. Das Leitspindelschloss kann indirekt mit der Steuerwelle 106 verbunden sein, zum Beispiel um Elastizität in den Antrieb miteinzubeziehen. Getriebe können ebenfalls in die Antriebe zwischen dem Motor 130 und dem Ritzel 132 und/oder zwischen dem Motor 140 und der Leitspindel 142 einbezogen sein. Darüber hinaus können beide Motoren während des Wechsels von einem Gang zum anderen gleichzeitig betrieben werden, so dass die Zwischenposition in einer weiter rollenden Bewegung statt als einzelne Bewegungen der Schalttrommel und der Steuerwelle erzielt werden können.

Während in den obigen Ausführungsformen die Kupplungen 20, 30 hydraulisch gesteuert werden, können sie auch durch andere Mittel gesteuert werden, zum Beispiel durch pneumatische oder elektromechanische Betätigungsglieder.

Die Anzahl der Gangstufen, Synchronschalteinheiten und Schaltlineale im Getriebe und die Anordnung davon können ebenfalls verändert werden.

## Patentansprüche

1. Schaltmechanismus (100) für ein Doppelkupplungsgetriebesystem, umfassend:
eine Mehrzahl von Schaltlinealen (92, 94, 96, 98), die parallel zueinander angebracht sind, wobei jedes Schaltlineal (92, 94, 96, 98) so ausgelegt ist, um eine Synchronschalteinheit (82, 84, 86, 88) eines mehrstufigen Getriebes (12) zu steuern;
eine Schalttrommel (102) zur Drehung um eine Achse parallel zu einer Achse der Schaltlineale (92, 94, 96, 98) angebracht ist, wobei die Schalttrommel (102) zur Drehung um eine Steuerwelle (106) angebracht ist;
die Schalttrommel (102) eine ringförmige Nut (110) aufweist, wobei ein Schaltfinger (112) an jedem der Schaltlineale (92, 94, 96, 98) sich in die ringförmige Nut (110) erstreckt, wobei die Schaltfinger (112) der Schaltlineale (92, 94, 96, 98) um die Nut (110) in winkelig beabstandeten Stellen angeordnet sind;
**dadurch gekennzeichnet, dass**
die ringförmige Nut (110) in der Schalttrommel (112) einen ersten Abschnitt (114) mit einer axialen Breite, die eine enge Spielpassung mit den Schaltfingern (112) auf den Schaltlinealen (92, 94, 96, 98) darstellt, und einen zweiten Abschnitt (116) aufweist, dessen Breite ausreicht, um eine axiale Bewegung des Schaltfingers (112) auf den Schaltlinealen (92, 94, 96, 98) zwischen einer ersten Position, in welcher ein erstes Zahnrad (60, 64; 74, 62; 46, 50; 52, 48) eingerückt ist, das der Synchronschalteinheit (82, 84, 86, 88) beigefügt ist, die ihrerseits durch das Schaltlineal (92, 94, 96, 98) gesteuert wird, und einer zweiten Position zuzulassen, in welcher ein zweites Zahnrad (64, 60; 62, 74; 50, 46; 48, 52) eingerückt ist, das der Synchronschalteinheit (82, 84, 86, 88) beigefügt ist, die ihrerseits durch das Schaltlineal (92, 94, 96, 98) gesteuert wird, wobei Rampen (118) in den Wänden der Nut zwischen dem ersten und dem zweiten Abschnitt (114, 116) vorgesehen sind;
ein axialer Schlitz (120) in der Schalttrommel (102) vorgesehen ist, wobei sich der axiale Schlitz (120) über die Wände der ringförmigen Nut (110) hinaus mittig zum zweiten Abschnitt (116) davon erstreckt;
ein Schaltbetätigungsmittel (122) auf der Steuerwelle (106) bereitgestellt ist, wobei das Schaltbetätigungsmittel (122) sich durch den axialen Schlitz (120) erstreckt;
Mittel (130, 132, 134) zum Drehen der Schalttrommel (102) und der Steuerwelle (106), um das Schaltbetätigungsmittel (122) auf der Steuerwelle (106) in axiale Ausrichtung mit dem Schaltfinger (112) auf einem der Schaltlineale (92, 94, 96, 98) zu bringen; und
Mittel (140, 142, 144) zum Bewegen der Steuerwelle (106) in axiale Richtung, um den Schaltfinger (112) auf dem in Flucht gebrachten Schaltlineal (92, 94, 96, 98) zu einer Wand des zweiten Abschnitts (116) der ringförmigen Nut (110) zu bewegen, um ein dazu beigefügtes Zahnrad in Eingriff zu bringen.

2. Schaltmechanismus (100) nach Anspruch 1, **dadurch gekennzeichnet, dass** das Schaltbetätigungsmittel (122) auf der Steuerwelle (106) gegabelt ist, wobei es ein Paar Forken (124) aufweist, zwischen welchen die Schaltfinger (112) auf den Schaltlinealen (92, 94, 96, 98) angeordnet sein können, was die Bewegung der Schaltlineale (92, 94, 96, 98) in entgegengesetzte axiale Richtungen als Reaktion auf die axiale Bewegung der Steuerwelle (106) zulässt.

3. Schaltmechanismus (100) nach Anspruch 1, **dadurch gekennzeichnet, dass** die Schaltfinger (112) auf den Schaltlinealen (92, 94, 96, 98) gegabelt sind, wobei sie ein Paar Forken aufweisen, zwischen welchen das Schaltbetätigungsmittel (122) auf der Steuerwelle (106) angeordnet sein kann, was die Bewegung der Schaltlineale (92, 94, 96, 98) in entgegengesetzte axiale Richtungen als Reaktion auf die axiale Bewegung der Steuerwelle (106) zulässt.

4. Schaltmechanismus (100) nach jedem der vorangehenden Ansprüche, **dadurch gekennzeichnet, dass** die Schalttrommel (102) und die Steuerwelle (106) mittels eines ersten Elektromotors (130) gedreht werden.

5. Schaltmechanismus (100) nach Anspruch 4, **dadurch gekennzeichnet, dass** der erste Elektromotor (130) antriebsfähig mit der Schalttrommel (102) mittels eines Ritzels (132) verbunden ist, welches mit einem Zahnrad (134) kämmt, das auf der Schalttrommel (102) angebracht ist.

6. Schaltmechanismus (100) nach jedem der vorangehenden Ansprüche, **dadurch gekennzeichnet, dass** die Steuerwelle (106) mittels eines zweiten Elektromotors (140) axial bewegt wird.

7. Schaltmechanismus (100) nach Anspruch 6, **dadurch gekennzeichnet, dass** der zweite Elektromotor (140) die Steuerwelle (106) mittels eines Leitspindelschlossmechanismus (142, 144) antreibt.

8. Schaltmechanismus (100) nach Anspruch 7, **dadurch gekennzeichnet, dass** eine Abtriebswelle des zweiten Elektromotors (140) antriebsfähig mit einer Leitspindel (142) verbunden ist, wobei ein Leitspindelschloss (144) in die Leitspindel (142) eingreift, wobei das Leitspindelschloss (144) antriebsfähig mit der Steuerwelle (106) auf eine Weise verbunden ist, welche axial in Bezug auf die Steuerwelle (106) fixiert ist, aber die Drehung der Steuerwelle (106) relativ zum Leitspindelschloss (144) zulässt.

## Claims

1. Shifting mechanism (100) for a double clutch transmission system, comprising:
a plurality of shifting lineals (92, 94, 96, 98) which are arranged parallel to one another, wherein each shifting lineal (92, 94, 96, 98) is designed in order to control a synchronizing shifting unit (82, 84, 86, 88) of a multi-stage transmission (12);
a shifting drum (102) is arranged for rotation about an axis parallel to an axis of the shifting lineals (92, 94, 96, 98), wherein the shifting drum (102) is arranged so as to rotate about a control shaft (106);
the shifting drum (102) has an annular groove (110), wherein a shifting finger (112) on each of the shifting lineals (92, 94, 96, 98) extends into the annular groove (110), and wherein the shifting fingers (112) of the shifting lineals (92, 94, 96, 98) are arranged in positions at an angular spacing around the groove (110);
**characterized in that**
the annular groove (110) in the shifting drum (112) has a first section (114) with an axial width which constitutes a close clearance fit with the shifting fingers (112) on the shifting lineals (92, 94, 96, 98), and a second section (116), the width of which suffices in order to permit an axial movement of the shifting finger (112) on the shifting lineals (92, 94, 96, 98) between a first position, in which a first gearwheel (60, 64; 74, 62; 46, 50; 52, 48) is engaged, which gearwheel is attached to the synchronizing shifting unit (82, 84, 86, 88) which, for its part, is controlled by the shifting lineal (92, 94, 96, 98), and a second position in which a second gearwheel (64, 60; 62, 74; 50, 46; 48, 52) is engaged, which gearwheel is attached to the synchronizing shifting unit (82, 84, 86, 88) which, for its part, is controlled by the shifting lineal (92, 94, 96, 98), with ramps (118) being provided in the walls of the groove between the first and the second sections (114, 116);
an axial slot (120) is provided in the shifting drum (102), the axial slot (120) extending beyond the walls of the annular groove (110) centrally with respect to the second section (116) thereof;
a shifting actuating means (122) is provided on the control shaft (106), the shifting actuating means (122) extending through the axial slot (120);
means (130, 132, 134) for rotation of the shifting drum (102) and the control shaft (106) in order to bring the shifting actuating means (122) on the control shaft (106) into axial alignment with the shifting finger (112) on one of the shifting lineals (92, 94, 96, 98); and
means (140, 142, 144) for moving the control shaft (106) in the axial direction in order to move the shifting finger (112) on the shifting lineal (92, 94, 96, 98), which is brought into alignment, to a wall of the second section (116) of the annular groove (110) so as to bring a gearwheel attached to said section into engagement.

2. Shifting mechanism (100) according to Claim 1, **characterized in that** the shifting actuating means (122) on the control shaft (106) is forked, with it having a pair of forks (124) between which the shifting fingers (112) can be arranged on the shifting lineals (92, 94, 96, 98), which permits the movement of the shifting lineals (92, 94, 96, 98) in opposite axial directions as a reaction to the axial movement of the control shaft (106).

3. Shifting mechanism (100) according to Claim 1, **characterized in that** the shifting fingers (112) on the shifting lineals (92, 94, 96, 98) are forked, with them having a pair of forks between which the shifting actuating means (122) on the control shaft (106) can be arranged, which permits the movement of the shifting lineals (92, 94, 96, 98) in opposite axial directions as a reaction to the axial movement of the control shaft (106).

4. Shifting mechanism (100) according to each of the preceding claims, **characterized in that** the shifting drum (102) and the control shaft (106) are rotated by means of a first electric motor (130).

5. Shifting mechanism (100) according to Claim 4, **characterized in that** the first electric motor (130) is connected drivably to the shifting drum (102) by means of a pinion which meshes with a gearwheel (134) which is arranged on the shifting drum (102).

6. Shifting mechanism (100) according to each of the preceding claims, **characterized in that** the control shaft (106) is moved axially by means of a second electric motor (140).

7. Shifting mechanism (100) according to Claim 6, **characterized in that** the second electric motor (140) drives the control shaft (106) by means of a lead-screw lock mechanism (142, 144).

8. Shifting mechanism (100) according to Claim 7, **characterized in that** an output shaft of the second electric motor (140) is connected drivably to a lead screw (142), a lead-screw lock (144) engaging in the lead screw (142), and the lead-screw lock (144) being connected drivably to the control shaft (106) in a manner which is fixed axially with respect to the control shaft (106) but permits the rotation of the control shaft (106) relative to the lead-screw lock (144).

## Revendications

1. Mécanisme de commutation (100) pour un système de transmission à double accouplement comprenant :
une pluralité de guides de commutation (92, 94, 96, 98) qui sont montés parallèlement les uns aux autres, chaque guide de commutation (92, 94, 96, 98) étant conçu pour commander une unité de commutation synchrone (82, 84, 86, 88) d'un engrenage (12) à plusieurs rapports ;
un tambour de commutation (102) destiné à tourner autour d'un axe parallèle à un axe des guides de commutation (92, 94, 96, 98), le tambour de commutation (102) étant monté de manière à tourner autour d'un arbre de commande (106)
le tambour de commutation (102) présente une rainure de forme annulaire (110), une languette de commutation (112) sur chacun des guides de commutation (92, 94, 96, 98) s'étendant dans la rainure de forme annulaire (110), les languettes de commutation (112) des guides de commutation (92, 94, 96, 98) étant disposées autour de la rainure (110) à des endroits espacés d'un certain angle entre eux ;
**caractérisé en ce que**
la rainure de forme annulaire (110) dans le tambour de commutation (112) présente une première section (114) ayant une largeur axiale qui représente un ajustement à jeu étroit avec les languettes de commutation (112) sur les guides de commutation (92, 94, 96, 98) et une deuxième section (116) dont la largeur est suffisante pour permettre un mouvement axial de la languette de commutation (112) sur les guides de commutation (92, 94, 96, 98) entre une première position dans laquelle une première roue dentée (60, 64 ; 74, 62 ; 46, 50 ; 52, 48) est enclenchée, laquelle accompagne l'unité de commutation synchrone (82, 84, 86, 88) qui, de son côté, est commandée par le guide de commutation (92, 94, 96, 98), et une deuxième position dans laquelle une deuxième roue dentée (64, 60 ; 62, 74 ; 50, 46 ; 48, 52) est enclenchée, laquelle accompagne l'unité de commutation synchrone (82, 84, 86, 88) qui, de son côté, est commandée par le guide de commutation (92, 94, 96, 98), des rampes (118) étant prévues dans les parois de la rainure entre la première et la deuxième sections (114, 116) ;
une fente axiale (120) est prévue dans le tambour de commutation (102), la fente axiale (120) s'étendant au-delà des parois de la rainure de forme annulaire (110) au centre de la deuxième section (116) de celle-ci ;
il est prévu un moyen d'actionnement de commutation (122) sur l'arbre de commande (106), le moyen d'actionnement de commutation (122) s'étendant à travers la fente axiale (120) ;
des moyens (130, 132, 134) pour faire tourner le tambour de commutation (102) et l'arbre de commande (106) afin d'amener le moyen d'actionnement de commutation (122) sur l'arbre de commande (106) en alignement axial avec la languette de commutation (112) sur l'un des guides de commutation (92, 94, 96, 98) ; et
des moyens (140, 142, 144) pour déplacer l'arbre de commande (106) dans le sens axial afin d'amener la languette de commutation (112) sur le guide de commutation (92, 94, 96, 98) mis dans l'alignement vers une paroi de la deuxième section (116) de la rainure de forme annulaire (110) afin de venir en prise avec une roue dentée prévue à cet effet.

2. Mécanisme de commutation (100) selon la revendication 1, **caractérisé en ce que** le moyen d'actionnement de commutation (122) est enfourché sur l'arbre de commande (106), celui-ci présentant une paire de dents (124) entre lesquelles peuvent être disposées les languettes de commutation (112) sur les guides de commutation (92, 94, 96, 98), ce qui permet le déplacement des guides de commutation (92, 94, 96, 98) dans des directions axiales opposées en réaction au mouvement axial de l'arbre de commande (106).

3. Mécanisme de commutation (100) selon la revendication 1, **caractérisé en ce que** les languettes de commutation (112) sont enfourchées sur les guides de commutation (92, 94, 96, 98), celles-ci présentant une paire de dents entre lesquelles le moyen d'actionnement de commutation (122) peut être disposé sur l'arbre de commande (106), ce qui autorise le déplacement des guides de commutation (92, 94, 96, 98) dans des directions axiales opposées en réaction au mouvement axial de l'arbre de commande (106).

4. Mécanisme de commutation (100) selon l'une des revendications précédentes, **caractérisé en ce que** le tambour de commutation (102) et l'arbre de commande (106) sont mis en rotation au moyen d'un premier moteur électrique (130).

5. Mécanisme de commutation (100) selon la revendication 4, **caractérisé en ce que** le premier moteur électrique (130) est relié de manière entraînable avec le tambour de commutation (102) au moyen d'un pignon (132), lequel s'engrène avec une roue dentée (134) qui est montée sur le tambour de commutation (102).

6. Mécanisme de commutation (100) selon l'une des revendications précédentes, **caractérisé en ce que** l'arbre de commande (106) est déplacé dans le sens axial au moyen d'un deuxième moteur électrique (140).

7. Mécanisme de commutation (100) selon la revendication 6, **caractérisé en ce que** le deuxième moteur électrique (140) entraîne l'arbre de commande (106) au moyen d'un mécanisme de fermeture à vis-mère (142, 144).

8. Mécanisme de commutation (100) selon la revendication 7, **caractérisé en ce qu'**un arbre de sortie du deuxième moteur électrique (140) est relié de manière entraînable avec une vis-mère (142), le mécanisme de fermeture à vis-mère (144) pénétrant dans la vis-mère (142), le mécanisme de fermeture à vis-mère (144) étant relié de manière entraînable avec l'arbre de commande (106) d'une manière qui est fixe dans le sens axial par rapport à l'arbre de commande (106), mais qui autorise la rotation de l'arbre de commande (106) par rapport au mécanisme de fermeture à vis-mère (144).
